Europäisches Patentamt

European Patent Office

Office européen des brevets

(11) Numéro de publication : **0 282 428 B1**

## (12) FASCICULE DE BREVET EUROPEEN

(45) Date de publication du fascicule du brevet :
29.01.92 Bulletin 92/05

(51) Int. Cl.⁵ : **G09F 3/00, G01N 24/00**

(21) Numéro de dépôt : **88450007.5**

(22) Date de dépôt : **12.02.88**

(54) **Procédé de marquage d'objets par micro-cristaux à effet de mémoire et marqueurs pour sa mise en oeuvre.**

(30) Priorité : **13.02.87 FR 8701970**

(43) Date de publication de la demande :
**14.09.88 Bulletin 88/37**

(45) Mention de la délivrance du brevet :
**29.01.92 Bulletin 92/05**

(84) Etats contractants désignés :
**AT BE CH DE ES GB GR IT LI LU NL SE**

(56) Documents cités :
**FR-A- 1 601 856
FR-A- 2 007 339
FR-A- 2 556 867**

(56) Documents cités :
**SOVIET PHYSICS, JETP, vol. 57, no. 6, juin
1983, pages 1345-1350, American Institute of
Physics, New York, US; S.A. KAZANSKII et al.:
"Effect of a low-frequency magnetic field on
NMR and dynamic nuclear polarization of
nuclei in Al2O3:Cr3+ and CaF2:Tm"**

(73) Titulaire : **MICROTRACE INTERNATIONAL
Boulevard Royal No. 2
Luxembourg (LU)**

(72) Inventeur : **Schvoerer, Max
27 cours Galliéni
F-33000 Bordeaux (FR)**
Inventeur : **Ney, Claude
27 cours Galliéni
F-33000 Bordeaux (FR)**

(74) Mandataire : **Thébault, Jean-Louis
Cabinet Thébault S.A. 1 Allées de Chartres
F-33000 Bordeaux (FR)**

## Description

La présente invention a trait à un procédé de marquage d'objets quelconques à l'aide de micro-cristaux à effet mémoire en vue de reconnaître et authentifier ultérieurement en toute circonstance ledit objet par identification d'un message spécifique contenu dans lesdits micro-cristaux et introduit au cours des opérations de marquage. Le document FR-A-2 556 867 cite également un procédé de marquage de sécurité.

Le but de l'invention est de fournir un moyen fiable pour marquer un objet, capable de conserver un message ou information spécifique à l'objet pendant une très longue durée en dépit des risques naturels et des tentatives de tous ordres de suppression ou altération dudit message, en vue d'établir ultérieurement l'authentification de l'objet porteur du marqueur par lecture dudit message et comparaison avec un message témoin image du message introduit dans le marqueur incorporé à l'objet authentique et conservé en un lieu sûr.

A cet effet, l'invention a pour objet un procédé de marquage d'objets par micro-cristaux à effet mémoire, caractérisé en ce qu'il consiste à choisir parmi les cristaux présentant une garantie de stabilité du cristal dans les conditions d'introduction et de lecture d'un message ou information spécifique à chaque objet, un ou plusieurs micro-cristaux sous forme d'une poudre de cristaux de très petites dimensions, à doper, si ce n'est déjà fait naturellement, chaque micro-cristal à l'aide de l'un quelconque des terres rares et métaux de transition, à raison de 100 à 1000 ppm environ en poids par rapport au micro-cristal, à vider par chauffage les centres pièges présents dans le ou les micro-cristaux, à irradier le ou les micro-cristaux avec des rayons à grande énergie ou des particules, suivant une dose prédéterminée afin de piéger à l'état énergétiquement métastable les porteurs de charges libérés par ionisation des atomes, en nombre proportionnel à ladite dose, le choix du ou des micro-cristaux et les conditions de dopage et d'irradiation déterminant ledit message ou information spécifique à chaque objet, à appliquer en au moins un endroit déterminé de l'objet une quantité déterminée du ou des micro-cristaux ainsi irradiés et à consigner en un lieu sûr, en vue de comparaisons ultérieures, les caractéristiques, implantation et conditions de dopage et irradiation du ou des micro-cristaux.

De la sorte, si, un jour, une authentification d'un tel objet marqué est nécessaire, il suffira de recueillir une partie du ou des micro-cristaux appliqués sur l'objet, de lire le contenu du message porté par le marqueur constitué par ledit ou lesdits micro-cristaux et de comparer ces données avec celles consignées au moment du marquage de l'objet authentique. Un tel travail d'authentification sera bien entendu réalisé par un laboratoire compétent et habilité et qui aura donc accès auxdites données consignées en lieu sûr et saura procéder comme il convient à la récupération des micro-cristaux.

La lecture consiste à détecter lesdits porteurs de charge piégés dans les défauts spécifiques du ou des micro-cristaux en mettant en oeuvre à la manière connue des phénomènes physiques induits par l'irradiation, par exemple la modification d'absorption optique, de photoconductivité, la résonance paramagnétique électronique, la photoluminescence ou la thermoluminescence.

Le marqueur, objet de la présente invention, et qui est le support matériel du message ou information spécifique de chaque objet à marquer, est un cristal ou un éclat de verre de très petites dimensions, en général inférieures à 50 micromètres. Il peut être de synthèse ou naturel. Dans tous les cas il contient, par dopage volontaire (support de synthèse) ou spontané (support naturel) les défauts de structure qui le rendent apte à recevoir et mémoriser ledit message. Comme supports on peut citer, entre autres, les fluorines de type $CaF_2$, LiF, les sulfates de type Ca, Ba, $SrSO_4$, les alumines ou aluminates $Al_2O_3$;N, certains silicates, borates et carbonates, les quartz, les feldspaths.

Les supports ci-dessus conviennent tout particulièrement, mais, d'une manière générale, tous les cristaux de couleur claire ou transparents sont susceptibles de présenter les caractéristiques requises, à savoir une bonne stabilité structurale dans le temps et dans les conditions d'introduction du message (irradiation) et de restitution de celui-ci (lecture) et une bonne capacité de mémorisation ainsi qu'une bonne résistance aux agents chimiques ordinaires.

Certains cristaux, tels que certaines fluorines, sont naturellement dopés dans les proportions désirées, de l'ordre de 100 à 1000 ppm de terre rare, et présentent les défauts convenables.

Pour les cristaux de synthèse on module avantageusement les conditions oxydo-réductrices de la préparation de dopage afin, conjointement avec l'introduction de la quantité optimale de dopant, d'obtenir le nombre de défauts désiré.

Dans la présente invention on entend par cristal un état général des solides structuralement très bien organisé, ce terme couvrant, ici, non seulement les cristaux au sens scientifique mais également des solides moins bien organisés pouvant aller jusqu'à l'état amorphe (verres).

A titre d'exemple, afin d'obtenir un micro-cristal convenable, on place du sulfate de calcium à l'état de gypse dans de l'acide sulfurique avec de l'oxyde de dysprosium à raison d'environ 100 ppm en poids. On fait bouillir et on récupère dans le fond du récipient des cristaux de $CaSO_4$;Dy dans lesquels quelques atomes de dysprosium remplacent certains atomes de calcium.

L'une quelconque des terres rares et l'un quelconque des métaux de transition peuvent convenir, la proportion de terre rare ou du métal de transition pouvant varier avec leur nature.

La teneur optimale en terre rare du cristal dopé correspond par exemple à l'amplitude maximale de l'intensité du signal de résonance paramagnétique électronique lorsque le cristal est soumis à une telle irradiation ou à l'intensité maximale de la thermoluminescence si on utilise cette autre méthode de mesure.

Les modifications desdites conditions oxydo-réductrices consistent pratiquement en la seule modification de la teneur en oxygène. Cette variation de la teneur en oxygène entraîne une variation du nombre et de la profondeur des défauts que l'on appelle également centres pièges.

Il a été dit plus haut que l'insertion du message dans le micro-cristal dopé consistait à irradier celui-ci à l'aide de rayons à grande énergie ou des particules.

Il peut s'agir par exemple de rayons X, gamma, UV, ou de particules alpha, beta, des ions, etc...

Une telle irradiation ionise les atomes et piège les porteurs de charge libérés dans des défauts spécifiques (ou centres pièges) du cristal où ils s'accumulent dans des états énergétiquement métastables. En fonction de la profondeur énergétique des centres pièges, la durée de rétention de ces porteurs peut être très longue ; dans certains cristaux elle atteint des dizaines de milliers d'années. Les défauts ou centres pièges sont généralement des lacunes ou des agrégats de lacunes atomiques, ou des impuretés chimiques. Leur nature et leur situation dans un cristal ou dans un verre sont spécifiques du solide considéré et de son mode de préparation. L'intérêt de l'action sur le mode de préparation du cristal dopé (modifications des conditions oxydo-réductrices) réside dans la possiblité ainsi offerte d'augmenter le nombre des centres pièges et donc d'introduire un message plus diversifié comme on le verra plus loin.

La dose d'irradiation, exprimée en rad, peut varier. Elle détermine proportionnellement le nombre des électrons arrachés aux anions et qui deviennent libres. Ces électrons sont alors capturés sur la couche externe des terres rares qui passent de l'état stable $3^+$ à l'état $2^+$ qui est métastable mais qui peut durer très longtemps.

La dose d'irradiation détermine donc proportionnellement le nombre d'atomes de terre rare à l'état 2+.

Il faut noter que préalablement à l'incorporation d'un message dans le cristal, il est préférable de vider les centres pièges pour mettre à zéro en quelque sorte la mémoire du cristal. Cela s'opère par un simple chauffage du cristal à une température suffisante, de l'ordre de 450°C.

L'irradiation incorpore donc dans le cristal dopé une information qui est énergétiquement bien accrochée car il faudra une quantité d'énergie importante pour refaire basculer les atomes de terre rare de l'état $2^+$ à l'état $3^+$. Ces quantités d'énergie devront bien entendu être appliquées aux cristaux lors de la lecture du message incorporé. S'il s'agit par exemple d'une lecture en thermoluminescence, il faudra chauffer les cristaux aux environs de 450°C. S'il s'agit d'une lecture en résonance paramagnétique électronique on devra plonger les cristaux dans un champ magnétique très intense de l'ordre de 50.000 gauss. D'autres techniques de lecture sont bien entendu possibles comme indiqué plus haut.

Ces énergies ne peuvent, en principe, être mises en oeuvre sans avoir repéré sur l'objet les micro-cristaux, les avoir isolés, caractérisés et soumis à un traitement puissant en laboratoire, autant d'étapes cumulées qui sont le garant de la pérennité de l'intégrité du marqueur.

Au moment de la lecture, par exemple par thermoluminescence, la chaleur, au fur et à mesure que croît la température, va vider successivement les centres pièges du cristal dopé en commençant par les pièges les moins profonds énergétiquement. Chaque électron chassé d'un piège ira vers la terre rare dont l'excitation est suivie immédiatement d'une désexcitation radiative (photon capté et mesuré par l'appareil de mesure par thermoluminescence).

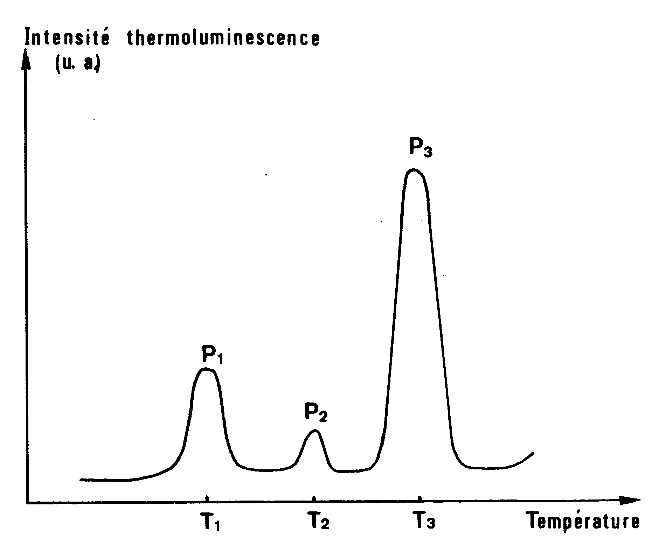

Sur la figure unique annexée la présente description on a représenté un exemple de courbe de lecture par thermoluminescence d'un message porté par un marqueur selon l'invention.

En abscisses est indiquée la température et en ordonnées figure l'intensité de la thermoluminescence en unité arbitraire (u.a).

Le marqueur en question est par exemple un cristal de fluorure de calcium dopé avec du cérium ($Ce^{3+}$).

Sur la figure on observe trois pics successifs P1,P2,P3 de hauteurs inégales et correspondant à trois températures différentes T1,T2,T3.

La position des pics le long de l'axe des abscisses est caractéristique du type de cristal.

La hauteur relative des pics est caractéristique des conditions de cristallogénèse.

L'intensité du pic haute température (pic P3 d'intensité la plus grande) est directement proportionnelle à la dose d'irradiation au moment de l'incorporation du message dans le cristal dopé.

Enfin, la couleur de l'émission thermoluminescente, qui est éventuellement analysée, est caractéristique de la terre rare dopant le cristal.

Ainsi, la courbe de lecture en thermoluminescence, telle que celle représentée sur la figure, constitue une sorte de photographie d'identité caractéristique du marqueur. Par le choix du type de cristal, du type de dopant, des conditions de cristallogénèse (modification des conditions oxydo-réductrices) et du mode et de la dose d'irradiation du cristal dopé, on associe plusieurs données caractéristiques qui permettent un très grand nombre de combinaisons différentes, chacune constituant un message unique qui sera incorporé à l'objet à marquer par l'application du marqueur, c'est-à-dire le cristal dopé irradié portant ledit message spécifique de l'objet concerné, par des moyens appropriés en un ou plusieurs endroits choisis de l'objet.

Il est à noter incidemment que l'on peut combiner, pour constituer un marqueur, plusieurs micro-cristaux dopés et irradiés ayant des messages différents.

Par objet on entend tout support matériel en matériau quelconque, plan (documents de toutes sortes par exemple), ou volumineux.

Une application immédiate de l'invention vise le mobilier en général, les tableaux, les statuettes, les objets céramiques, les livres. D'autres applications sont envisageables aux bijoux, fourrures, timbres, etc... et, d'une manière générale, à tout objet présentant une valeur ou un intérêt, à des titres divers et dont on veut pouvoir, ultérieurement, même très longtemps après et à tout moment, vérifier l'authenticité.

Suivant un mode d'application d'un marqueur selon l'invention sur l'objet, on mêle le ou l'association de micro-cristaux à une colle à séchage rapide. Plusieurs colles de commerce ont été testées et peuvent convenir en raison de leur transparence et de leur non fluorescence dans l'Ultra-Violet et du fait qu'elles possèdent un solvant spécifique. La colle doit également être adaptée à la nature de l'objet à marquer.

Le mode d'application de la colle comportant les micro-cristaux dépend de la nature de l'objet. On peut utiliser un pinceau, une seringue, faire une application électrique, par décalcomanie, etc... On peut procéder à une ou plusieurs applications sur un même objet, avec le même échantillon de colle ou une combinaison d'échantillons.

L'application du marqueur doit être aussi discrète que possible et ne doit être ni traumatisante ni destructrice pour l'objet marqué.

Outre la difficulté de repérer sur l'objet le ou les endroits où est appliquée la colle, qui est transparente et ne comporte qu'une très petite quantité de micro-cristaux, un tel marqueur est insensible aux élévations courantes de température (lampe à incandescence, radiateurs thermiques, eau très chaude, etc...), à un examen dans l'Ultra-Violet, une radiographie aux rayons X ou neutronique, ainsi qu'à un champ magnétique intense. Le marqueur ne risque donc pas de perdre son information spécifique ni par une action intentionnelle ni par suite de circonstances naturelles.

Il est à noter à ce propos que si une radiographie ou une observation en lumière ultra-violette est de nature à modifier une partie du message, à savoir un décalage vers le haut du pic P3, ce qui correspond à une élévation de la dose d'irradiation, une telle modification ne dénature pas le message global du marqueur, qui demeure pertinent, la modification de l'une des informations n'étant nullement rédhibitoire. De même, en cas d'incendie, les pièges les moins profonds dans le cristal dopé seront vidés mais les autres subsisteront et le message, là non plus, ne sera pas perdu.

Le seul risque pratique qu'encourt le marqueur est une action desctructrice volontaire ou non, par exemple une action mutilante, une action mécanique, etc... Dans ce cas, il est bien sûr impossible d'authentifier l'objet.

Dans tous les autres cas, le repérage et la lecture d'une partie des micro-cristaux appliqués sur l'objet permettra son authentification. On laisse en place bien entendu suffisamment de micro-cristaux pour d'éventuelles authentifications ultérieures.

Les micro-cristaux du marqueur, une fois repérés, sont récupérés par grattage ou dissolution de la colle qui les maintient sur l'objet marqué.

Aux fins d'authentification ultérieure, au moment de l'application du marqueur (choisi parmi un lot qui peut être très grand de marqueurs différents préalablement réalisés et stockés) on établit une fiche technique de l'objet marqué. De telles fiches constitueront une banque de données à la disposition d'un petit nombre de laboratoires performants, agréés, dont la haute spécialisation et l'audience scientifique internationale seront des garanties de qualité et de rigueur vis à vis de l'authentification qu'ils seront les seuls à pouvoir pratiquer.

Enfin, l'invention n'est évidemment pas limitée aux modes de réalisation décrits ci-dessus mais en couvre au contraire toutes les variantes notamment en ce qui concerne la nature du cristal et de la terre rare utilisables, les modes d'irradiation et de lecture des cristaux dopés, ainsi que la nature du véhicule porteur du ou des marqueurs et qui sera appliqué ou incorporé superficiellement ou dans la masse d'un ou plusieurs endroits de l'objet à marquer et la technique de mise en place dudit véhicule.

## Revendications

1. Procédé de marquage d'objets par micro-cristaux à effet mémoire, caractérisé en ce qu'il consiste à choisir parmi les cristaux présentant une garantie de stabilité du cristal dans les conditions d'introduction et de lecture d'un message ou information spécifique à chaque objet, un ou plusieurs micro-cristaux sous forme d'une poudre de cristaux de très petites dimensions, à doper, si ce n'est déjà fait naturellement, chaque micro-cristal à l'aide de l'un quelconque des terres rares et métaux de transition, à raison de 100 à 1000 ppm environ en poids par rapport au micro-cristal, à vider par chauffage les centres pièges présents dans le ou les micro-cristaux, à irradier le ou les micro-cristaux avec des rayons à grande énergie ou des particules, suivant une dose prédéterminée afin de piéger à l'état énergétiquement métastable les porteurs de charges libérés par ionisation des atomes, en nombre proportionnel à ladite dose, le choix du ou des micro-cristaux et les conditions de dopage et d'irradiation déterminant ledit message ou information spécifique à chaque objet, à appliquer en au moins un endroit déterminé de l'objet une quantité déterminée du ou des micro-cristaux ainsi irradiés et à consigner en un lieu sûr, en vue de comparaisons ultérieures, les caractéristiques, implantation et conditions de dopage et irradiation du ou des micro-cristaux.

2. Procédé suivant la revendication 1, caractérisé en ce que le cristal est choisi notamment dans le groupe constitué par les fluorines de type $CaF_2$, LiF, les sulfates de type Ca, Ba, $SrSO_4$, les alumines ou aluminates $Al_2O_3$;N, certains silicates borates et carbonates, les quartz, les feldspaths.

3. Procédé suivant la revendication 1 ou 2, caractérisé en ce qu'au cours du dopage on règle la teneur en oxygène de manière à modifier le nombre et la profondeur des pièges devant capter lesdits porteurs de charges libérés.

4. Procédé suivant l'une des revendications 1 à 3, caractérisé en ce que lesdites comparaisons ultérieures sont effectuées à partir de la lecture par prélèvement d'une partie du ou des micro-cristaux sur l'objet à authentifier, afin de retrouver ledit message ou information spécifique à l'objet.

5. Procédé suivant la revendication 4, caractérisé en ce que le mode de lecture du ou des micro-cristaux dopés est choisi parmi le groupe constitué par la mesure de la modification d'absorption optique, la mesure de la photoconductivité, la mesure de la résonance paramagnétique électronique, la mesure de la photoluminescence, la mesure de la thermoluminescence.

6. Procédé suivant l'une des revendications 1 à 4, caractérisé en ce que le ou les micro-cristaux sont mélangés à un véhicule constitué par une colle transparente et non fluorescente dans l'Ultra-Violet, ladite colle étant appliquée sur ou dans l'objet par tous moyens appropriés.

7. Marqueur pour la mise en oeuvre du procédé suivant l'une des revendications 1 à 6, caractérisé en ce qu'il est constitué d'un ou plusieurs micro-cristaux dopés à l'aide d'une terre rare ou d'un métal de transition, en poudre de dimensions de cristaux de l'ordre de 50 micromètres ou moins, irradiés chacun de doses, égales ou non, de rayonnement ou particules.

**Patentansprüche**

1. Verfahren zum Markieren von Objekten mit Speichermikrokristallen, dadurch gekennzeichnet, daß es darin besteht, unter den Kristallen, die eine Kristallstabilitätsgarantie unter den Bedingungen des Eingebens und Lesens einer für jedes Objekt spezifischen Nachricht oder Information aufweisen, ein oder mehrere Mikrokristalle in Form eines Pulvers aus Kristallen von sehr kleinen Abmessungen auszuwählen, jeden Mikrokristall mittels seltener Erden oder Übergangsmetallen zu etwa 100 bis 1000 ppm an Gewicht in bezug zum Mikrokristall zu dotieren, falls dies nicht bereits natürlich geschehen ist, die in dem oder den Mikrokristallen vorhandenen Fangstellen durch Erhitzen zu entleeren, den oder die Mikrokristalle mit Strahlen großer Energie oder Teilchen mit einer vorbestimmten Dosis zu bestrahlen, um im energetisch metastabilen Zustand die durch Ionisation von Atomen befreiten Ladungsträger in einer Anzahl proportional zu der besagten Dosis einzufangen, wobei die Wahl des oder der Mikrokristalle und die Dotierungs- und Bestrahlungsbedingungen die besagte, für jedes Objekt spezifische Nachricht oder Information bestimmt, an wenigstens einer vorbestimmten Stelle des Objekts eine vorbestimmte Menge des oder der auf diese Weise bestrahlten Mikrokristalle anzubringen und an einem sicheren Ort im Hinblick auf spätere Vergleiche die Eigenschaften, Implantation und Bedingungen des Dotierens und der Bestrahlung des oder der Mikrokristalle zu deponieren.

2. Verfahren nach Anspruch 1, dadurch gekennzeichnet, daß der Kristall insbesondere ausgewählt ist aus der Gruppe gebildet durch die Fluoride vom Typ $CaF_2$, LiF, den Sulfaten vom Typ Ca-, Ba-, $SrSO_4$, den Aluminiumoxiden oder Aluminaten $Al_2O_3$; N, bestimmten Silikaten, Boraten und Carbonaten, den Quartzen, den Feldspaten.

3. Verfahren nach Anspruch 1 oder 2, dadurch gekennzeichnet, daß man im Verlauf des Dotierens den Gehalt an Sauerstoff reguliert, so daß die Anzahl und Tiefe von Fangstellen vor dem Einfangen der besagten freigesetzten Ladungsträger modifiziert wird.

4. Verfahren nach einem der Ansprüche 1 bis 3, dadurch gekennzeichnet, daß die besagten späteren Vergleiche ausgehend vom Lesen durch Abnahme eines Teils des oder der Mikrokristalle auf dem zu identifizierenden Objekt vorgenommen werden, um die besagte für das Objekt spezifische Nachricht oder Information wiederzugewinnen.

5. Verfahren nach Anspruch 4, dadurch gekennzeichnet, daß die Art des Lesens des oder der dotierten Mikrokristalle ausgewählt wird unter der Gruppe gebildet durch das Messen der Änderung der optischen Absorption, das Messen der Photoleitfähigkeit, das Messen der paramagnetischen Elektronenresonanz, das Messen der Photolumineszenz, das Messen der Thermolumineszenz.

6. Verfahren nach einem der Ansprüche 1 bis 4, dadurch gekennzeichnet, daß der oder die Mikrokristalle mit einem Träger gemischt werden, der durch einen transparenten, im Ultravioletten nicht fluoreszierenden Klebstoff gebildet wird, wobei der besagte Klebstoff auf oder in das Objekt durch alle geeigneten Mittel auf- bzw. eingebracht wird.

7. Markierer zur Durchführung des Verfahrens nach einem der Ansprüche 1 bis 6, dadurch gekennzeichnet, daß er aus einem oder mehreren mittels seltener Erden oder Übergangsmetalle dotierten Mikrokristallen in Pulverform mit Kristallabmessungen in der Größenordnung von 50μm oder weniger gebildet wird, die jeweils mit gleichen oder nichtgleichen Strahlungs- oder Teilchendosen bestrahlt sind.

## Claims

1. Process for marking objects by memory micro-crystals, characterized in that it consists in choosing, from crystals having a guarantee of stability of the crystal under the conditions of introduction and reading of a message or information specific to each object, one or more micro-crystals in the form of a powder of very small sized crystals, in doping each micro-crystal, if it is not done naturally, by any one of the rare earths and transition metals, at the rate of about 100 to 1000 ppm by weight with respect to the micro-crystal, in emptying the trap centres present in the micro-crystal or microcrystals by heating, in irradiating the micro-crystal or micro-crystals with high energy rays or particles, according to a predetermined dose so as to trap the charge carriers released by ionization of the atoms, in a number proportional to said dose, while in their energetically metastable state, the choice of the micro-crystal or micro-crystals and the doping and irradiation conditions determining said message or information specific to each object, in applying in at least one given position of the object a given amount of the micro-crystal or micro-crystals thus irradiated and in keeping in a safe place, for subsequent comparisons, the characteristics, the implantation and doping and irradiation conditions of the micro-crystal or micro-crystals.

2. Process according to claim 1, characterized in that the crystal is chosen more particularly from the group formed by the fluorines of type $GaF_2$, Lif, sul-phates of type Ga, Ba, $SrSO_4$, aluminas or aluminates $Al_2O_3$;N, certain silicates, borates, carbonates, the quartzes, the feldspaths.

3. Process according to claim 1 or 2, characterized in that, during doping, the oxygen content is adjusted so as to modify the number and depth of the traps capturing said released charge carriers.

4. Process according to one of claims 1 to 3, characterized in that said subsequent comparisons are carried out from reading by taking a part of the micro-crystal or micro-crystals from the object to be authenticated, so as to recover said message or information specific to the object.

5. Process according to claim 4, characterized in that the method of reading the doped micro-crystal or micro-crystals is chosen from the group formed by measuring the optical absorption modification, measurement of the photoconductivity, measurement of the electronic paramagnetic resonance, measurement of the photoluminescence, measurement of the thermoluminescence.

6. Process according to one of claims 1 to 4, , characterised in that the micro-crystal or micro-crystals are mixed with a vehicle formed by a glue transparent and not fluorescent in ultra-violet light, said glue being applied to or in the object by any appropriate means.

7. Marker for implementing the process according to one of claims 1 to 6, characterized in that it is formed of one or more micro-crsytals doped with a rare earth or a transition metal, in the form of a powder with crystal dimensions of the order of 50 micrometers or less, each irradiated with radiation or particles doses which are equal or not.